# EUROPÄISCHE PATENTSCHRIFT

(11) **EP 0 443 099 B1**
(45) Veröffentlichungstag und Bekanntmachung des Hinweises auf die Patenterteilung: **11.10.1995**
(21) Anmeldenummer: 90121437.9
(22) Anmeldetag: 09.11.1990
(51) Int. Cl.: B60H 1/32

(54) **Kälteanlage**
Refrigeration system
Système de réfrigération

(30) Priorität: 23.02.1990 DE 4005728
(43) Veröffentlichungstag der Anmeldung: 28.08.1991
(73) Patentinhaber: Behr GmbH & Co., D-70469 Stuttgart (DE)
(72) Erfinder: Burk, Roland, Dipl.-Phys., W-7014 Kornwestheim (DE); Lochmahr, Karl, Dipl.-Ing. (FH), W-7143 Vaihingen/Enz (DE); Ingelmann, Hans-Joachim, Dipl.-Ing. (FH), W-7071 Iggingen-Schönhardt (DE)
(74) Vertreter: Dreiss, Uwe, Prof. Dr. jur. Dipl.-Ing. M.Sc.

(56) Entgegenhaltungen:
- EP-A- 0 091 006
- EP-A- 0 288 902
- DE-A- 3 818 584
- DE-A- 3 915 349
- FR-A- 2 538 518
- FR-A- 2 560 662
- US-A- 4 768 348
- US-A- 4 878 355

## Beschreibung

Die Erfindung bezieht sich auf eine an Bord eines Kraftfahrzeugs zu betreibende Kälteanlage mit einem Verdichter, einem Kondensator und einem Verdampfer sowie einem elektrisch ansteuerbaren thermostatischen Expansionsventil zwischen dem Kondensator und dem Verdampfer, wobei letzteres ein elektrisch ansteuerbares Betätigungsorgan aufweist, das zur Regelung der Überhitzung des Kältemitteldampfes von einem Signal ansteuerbar ist, welches von der Temperatur in der Leitung zwischen dem Verdichter und dem Kondensator sowie von der Temperatur in der Leitung hinter dem Verdampfer abgeleitet ist, wobei die Temperatur mittels eines Sensors erfaßbar ist.

Eine derartige Kälteanlage ist durch die US-A-4,878,355 bekannt geworden. Im Gegensatz zu stationären Kälteanlagen ist bei den Kälteanlagen eines Kraftfahrzeugs die Förderleistung des Verdichters ständigen Veränderungen unterworfen, weil er vom Motor des Kraftfahrzeugs angetrieben wird und sich dessen Drehzahl ständig verändert. Diese sich dauernd verändernden Betriebsbedinungen der Kälteanlage machen einen optimalen Betrieb schwierig. Ein besonders kritischer Betriebszustand ergibt sich beim Stillstand des Fahrzeugs, bei welchem der Verdichter von dem mit Leerlaufdrehzahl laufenden Fahrzeugmotor angetrieben wird. Die Belüftung des Kondensators ist in diesem Betriebszustand sehr ungünstig, was zu besonders hohen Brücken und Heißgastemperaturen führen kann. Kritisch sind desweiteren hohe Fahrgeschwindigkeiten in kleinem Gang. Die dabei auftretenden hohen Kompressordrehzahlen führen zu kritischen Heißgastemperaturen.

Ein optimaler Betrieb einer solchen Kälteanlage ergibt sich, wenn die maximale Temperatur hinter dem Verdichter einen bestimmten Wert nicht überschreitet. Andererseits ist man aber bemüht, mit einer möglichst großen "Überhitzung" des Kältemitteldampfes hinter dem Verdampfer zu arbeiten, wobei man als "Überhitzung" die Zunahme der Temperatur des Kältemitteldampfes gegenüber dem als Naßdampfgemisch vorliegendem Kältemittel bei gleichem Druck bezeichnet.

Maßgebend für das Erreichen oder zumindest nahe Herankommen der Temperatur hinter dem Verdichter an die angestrebte Maximaltemperatur ist die Kennlinie des Expansionsventils zwischen dem Kondensator und dem Verdampfer. Es ist wichtig, daß man verschiedene Meßgrößen des Kältemittelkreislaufes erfaßt und zur Steuerung des Expansionsventils heranzieht.

Bei der Kälteanlage der eingangs beschriebenen Art wird zu diesem Zwecke die Temperatur t₁ in der Leitung zwischen dem Verdichter und dem Kondensator und außerdem noch die Temperatur t₂ in der Leitung hinter dem Verdampfer erfaßt und zu Steuerungszwecken des Expansionsventils herangezogen. Dies führt zwar zu brauchbaren, jedoch nicht zu optimalen Ergebnissen einer in einem Kraftfahrzeug betriebenen Kälteanlage.

Es liegt infolgedessen die Aufgabe vor, eine Kälteanlage der eingangs genannten Art so weiterzubilden, daß ein verbesserter Betrieb der Kälteanlage bei den üblicherweise auftretenden Betriebszuständen erreicht wird.

Diese Aufgabe wird erfindungsgemäß dadurch gelöst, daß das von der Temperatur t₁ abgeleitete Signal das Betätigungsorgan des Expansionsventils derart ansteuert, daß eine Abregelung der Überhitzung Δt_{Ü} des Kältemitteldampfes in der Leitung hinter dem Verdampfer erfolgt, wenn die Temperatur t₁ in der Leitung hinter dem Verdichter einen bestimmten Wert t₁ₘₐₓ überschreitet und daß zusätzlich der Druck p₂ in der Leitung hinter dem Verdampfer zur Regelung der Überhitzung Δt_{Ü} des Kältemitteldampfes herangezogen wird.

Durch die Ermittlung des Druckes hinter dem Verdampfer und die Übermittlung eines dementsprechenden Signals an der Steuerkopf des Expansionsventils erhält man eine weitere Verbesserung der Regeleigenschaften des Expansionsventils, so daß in den verschiedenen Betriebszuständen des Kraftfahrzeugs immer eine Temperatur t₁ in der Leitung nach dem Verdichter erreicht wird, die nahe t₁ₘₐₓ liegt oder diesem Wert entspricht. Aufgrund dieser stets optimalen Überhitzung des Kältemitteldampfes hinter dem Verdampfer ist es möglich eine hohe Verdampferleistung bei optimalem Wirkungsgrad der gesamten Kälteanlage zu garantieren. Gleichzeitig ist aber auch sichergestellt, daß die maximal zulässige Temperatur in der Leitung zwischen Verdichter und Kondensator nicht überschritten und damit die Kälteanlage insgesamt, nicht beschädigt wird.

Ausführungsbeispiele der Erfindung und ihrer vorteilhaften Weiterbildungen werden im folgenden unter Bezugnahme auf die beigefügten Zeichnungen näher beschrieben. Es stellen dar:
- Figur 1: ein Ausführungsbeispiel;
- Figur 2: ein elektrisch ansteuerbares thermostatisches Expansionsventil;
- Figur 3: das Enthalpie-Diagramm für den Kreislauf nach Figur 1;
- Figur 4: verschiedene Betriebszustände eines Kraftfahrzeugs in dem Enthalpie-Diagramm nach Figur 3;
- Figur 5: ein zweites Ausführungsbeispiel;
- Figur 6(a), (b), (c): verschiedene schematische Darstellungen der Realisierung der Steuereinrichtung 100;
- Figur 7: eine verallgemeinerte Darstellung der Ausführungsbeispiele nach Figur 1 und 5;
- Figur 8(a), (b), (c): die Abhängigkeit der elektrischen Leistung (N) des elektrisch angesteuerten Betätigungsorgans des Expansionsventils, der Temperatur (t₁) hinter dem Verdichter und der Temperatur (t₂) des Kältemitteldampfes hinter dem Verdampfer in Abhängigkeit von der Überhitzung (Δt_{ü}) hinter dem Verdampfer bei einem Ausführungsbeispiel;
- Figur 9: die Leistung des Verdampfers (Q_{V}) und die Temperatur (t₁) des Kältemitteldampfes hinter dem Verdichter in Abhängigkeit von der Überhitzung (Δt_{ü});
- Figur 10: den Verlauf der Temperatur (t₁) hinter dem Verdichter, sowie den Verlauf der Überhitzung (Δt_{ü}) hinter dem Verdampfer in verschiedenen Betriebszuständen einer Kraftfahrzeug-Kälteanlage;
- Figur 11: der Verlauf der Temperatur (t_{LiK}) im Kopfraum eines Kraftfahrzeuges unter Verwendung der erfindungsgemäßen Kälteanlage bei den Betriebszuständen nach Fig. 10;
- Figur 12: eine Darstellung einer Low-Cost-Ausführung der Steuereinrichtung 100.

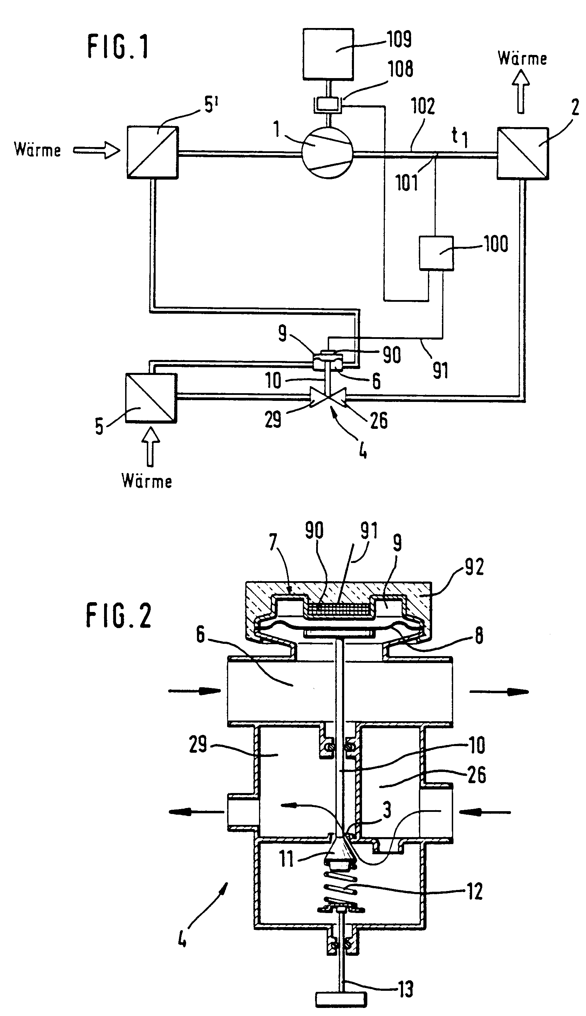

Bei der Kälteanlage nach Figur 1 wird Kältemitteldampf (Sauggas) bei niedrigem Druck und tiefer Temperatur von einem Verdichter 1 angesaugt und auf einen höheren Druck gebracht. Dabei erfolgt eine Erwärmung des Kältemittels. Im Kondensator 2 erfolgt die Verflüssigung bei hohem Druck unter Wärmeabgabe an die Umgebung. Das verflüssigte Kältemittel gelangt dann an ein Expansionsventil 4, in dem es durch eine Drosselstelle 3 (vgl. Fig. 2) hindurchtritt. Die Drosselung führt zu einer Druck- und Temperaturabnahme bei teilweiser Verdampfung des flüssigen Kältemittels. Das Kältemittel gelangt dann an den Verdampfer 5. Dort wird dem Kältemittel aus zu der zu kühlenden Umgebung, also z.B. dem Innenraum eines Kraftfahrzeugs, Wärme zugeführt. Dabei wird der restliche Teil des Kältemittels verdampft. Vom Verdampfer 5 gelangt der Kältemitteldampf (Sauggas) an den Sauggasraum 6 des Expansionsventils 4 und von dort an den Wärmetauscher 5′, der z.B. ein Kraftstoffkühler eines Kfz ist. Vom Wärmetauscher 5′ gelangt der Kältemitteldampf an den Verdichter 1; der Kreislauf beginnt dort von neuem.

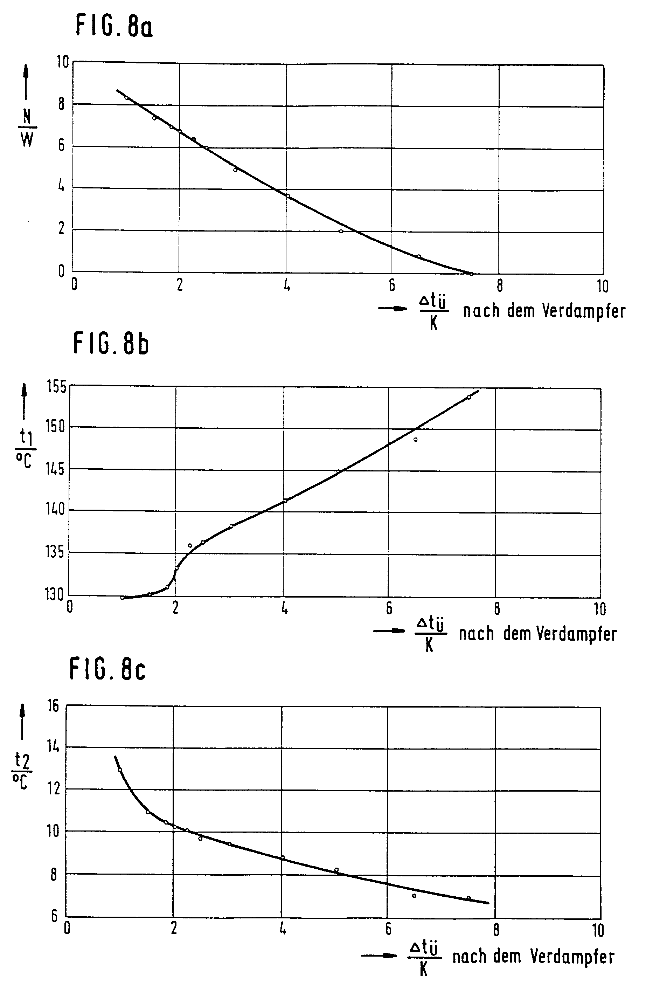

Figur 2 zeigt als eine Möglichkeit der Realisierung ein elektronisch ansteuerbares thermostatisches Expansionsventil, wie es bereits in der am 27.8.1988 eingereichten deutschen Patentanmeldung P 38 29 101.0, und zwar dort als Ausführungsbeispiel nach Figur 8, beschrieben ist. Der Sauggasraum 6 beaufschlagt eine Seite der Membran 8 im Steuerkopf 7. Der abgeschlossene Raum auf der anderen Seite der Membran 8 ist mit einem Steuermedium 9 gefüllt. Je nach dem, wie hoch Druck p₂ und Temperatur t₂ im Sauggasraum 6 sind, stellt sich eine bestimmte Lage der Membran 8 ein, die über die Übertragungsstange 10, an deren unterem Ende der Drosselkörper 11 vorgesehen ist, den Durchflußquerschnitt der Drosselstelle 3 bestimmt. Auf den Drosselkörper 11 wirkt von unten eine Feder 12, deren Kompression durch eine Spindel 13 eingestellt werden kann. Steigt die Temperatur t₂ im Sauggasraum 6, so führt dies zu einer Ausdehnung des Steuermediums 9 und damit zu einer Einstellung der Membran 8 auf einem tieferen Niveau. Entsprechend wird der Durchflußquerschnitt der Drosselstelle 3 vergrößert. Damit erhöht sich der Massestrom des Kältemittels; dies führt zu verstärkter Kühlung und damit zu einem Temperaturabfall im Sauggasraum 6.

Das Expansionsventil 4 nach Figur 2 weist ferner eine PTC-Heizplatte 90 (positive temperature coefficient) auf, die über eine Anschlußleitung 91 elektrisch beheizt werden kann, so daß zusätzlich zu dieser beschriebenen Regelung noch eine weitere externe Ansteuerung möglich ist. Beaufschlagt man also z.B. die Heizplatte 90 mit einem elektrischen Signal, so führt dies zu einer Expansion des Steuermediums 9 und somit zu einer weiteren Öffnung der Drosselstelle 3. Der gesamte Steuerkopf 7 ist von einer Isolierkappe 92 umschlossen. Das PTC-Heizelement hat die Eigenschaft, die Heizleistung durch Widerstandserhöhung ab einer bestimmten Temperatur zu begrenzen, wodurch der gesamte Ventilkopf vor zu hohen Temperaturen geschützt bleibt.

Über Leitung 91 gelangt das ansteuernde Signal an die Heizplatte 90 von einer Steuereinrichtung 100. Diese leitet das ansteuernde Signal aus einem oder mehreren Meßsignalen ab, das bspw. von einem lediglich durch einen Punkt 101 symbolisch dargestellten Sensor aufgenommen wird, der die Temperatur t₁ in der Leitung 102 zwischen Verdichter 1 und Kondensator 2 oder im Verdichter selbst feststellt.

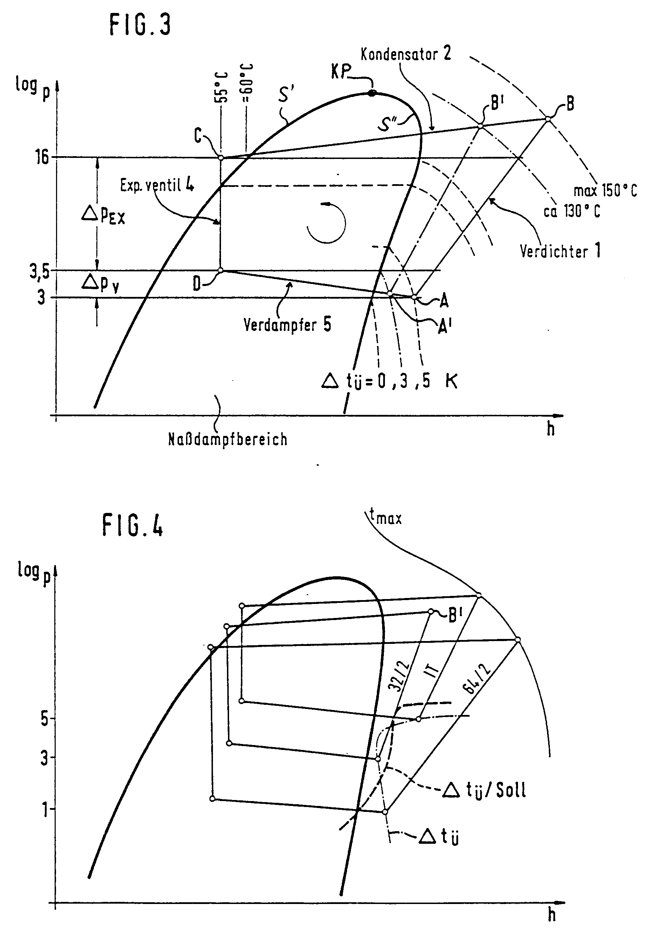

Der Zweck dieser Ansteuerung ergibt sich aus den Figuren 3 und 4. Es ist das Ziel der Ansteuerung des Expansionsventils 4
- einerseits mit einer relativ großen leistungsoptimalen "Überhitzung" des Kältemitteldampfes hinter dem Verdampfer 5 zu arbeiten, jedoch
- andererseits aus Sicherheitsgründen eine maximale Temperatur tₘₐₓ hinter dem Verdichter 1 z.B. von 150°, nicht zu überschreiten.

Die "Überhitzung" des Kältemitteldampfes hinter dem Verdampfer 5 beeinflußt den Teil des flüssigen Kältemittels, der in dem zur Schmierung des Kompressors beigemischten Öl gelöst bleibt und somit zur Kühlung nichts beiträgt. Dieser im Öl gelöste Kältemittelanteil nimmt jedoch mit zunehmender Überhitzung ab.

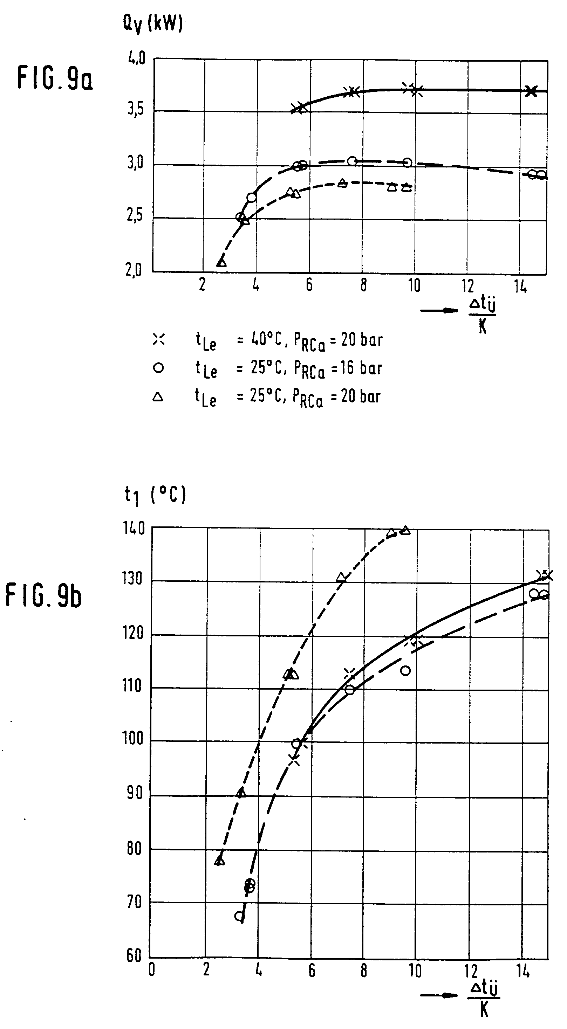

Untersuchungen zeigten, daß die für maximale Kälteleistung und Effektivität der Kälteanlage optimale Überhitzung bei relativ hohen Werten liegt (ca. 8K nach Fig. 9).

Als Überhitzung bezeichnet man dabei den Temperaturunterschied des am Ende des Verdampfers gasförmigen Kältemittels t₂ gegenüber dem der Sättigungstemperatur als Naßdampf/Öl-Gemisch bei gleichem Druck p₂ vorliegenden Kältemittels. Dieser Druck steht in einem formularen Zusammenhang mit der sogenannten Sättigungstemperatur tₚ₂ an der Sättigungslinie zwischen Naßdampf und Dampf. Zur Verdeutlichung sei dabei zunächst auf Figur 3 Bezug genommen. Dort bezeichnet die Kurve S' die Sättigungslinie zwischen Flüssigkeit und Naßdampf bzw die Kurve S'' die Sättigungslinie zwischen Naßdampf und Kältemitteldampf. Im kritischen Punkt KP geht die Flüssigkeit direkt in Dampf über. Die Linien AB bzw. A'B', BC bzw. B'C', sowie ferner die Linien CD und DA bzw. DA' bezeichnen die Zustandsänderungen im Verdichter 1, im Kondensator 2, im Expansionsventil 4 und im Verdampfer 5 (einschl. Wärmetauscher 5'). Zur Verdeutlichung sind die Temperaturwerte eingetragen. Bei einer Auslegung der gesamten Anlage, die durch die Punkte A und B gekennzeichnet ist, beträgt die Überhitzung Δt_{ü} hinter dem Verdampfer 5 z.B. 5 K. Dies führt unter den angenommenen Betriebsbedingungen dazu, daß hinter dem Verdichter 1 der Kältemitteldampf die maximal zulässige Temperatur tₘₐₓ (≡ t₁ₘₐₓ) von z.B. 150°C erreicht.

Bei einer anderen Auslegung, die durch die Punkte A' und B' gekennzeichnet ist, beträgt die Überhitzung Δt_{ü} nach dem Verdampfer 5 z.B. 3 K mit der Folge, daß hinter dem Verdichter 1 lediglich eine Temperatur des Kältemitteldampfes von ca. 130°C erreicht wird. In Figur 3 ist ferner zur Vervollständigung noch der bei Durchtritt durch das Expansionsventil 4 auftretende Druckverlust Δp_{EX} und der im Verdampfer 5 auftretende Druckverlust Δp_{V} eingetragen.

Bei Kälteanlagen im Kraftfahrzeugen besteht das Problem darin, daß sich die Betriebsbedingungen dauernd ändern; die Leistung des Verdichters, der vom Motor des Kraftfahrzeuges angetrieben wird, ändert sich laufend mit der Drehzahl. In Figur 4 sind in das Enthalpie-Diagramm typische Betriebszustände, nämlich die Betriebszustände 64/2 (64 km/h;2.Gang), 32/2 (32 km/h;2.Gang) und IT (Idle-Test = Leerlauf) eingetragen. Dies sind in der Kfz-Technik übliche Fahrwerte, bei denen maximale Kälteleistung = minimale Innentemperatur gefordert wird. Kritisch ist z.B. der Betriebszustand IT, bei dem sich das Fahrzeug im Stillstand befindet und der Verdichter von dem mit Leerlaufdrehzahl laufenden Fahrzeugmotor angetrieben wird. Die Belüftung des Kondensators ist in diesem Fall am ungünstigsten, so daß besonders hohe Drücke und Heißgastemperaturen auftreten können. Relativ unproblematisch ist der Fahrzustand 32/2; problematischer wiederum ist der Fahrzustand 64/2, bei dem durch hohe Kompressordrehzahlen kritische Heißgastemperaturen auftreten.

In Figur 4 ist für ein konventionelles thermostatisches Expansionsventil der typische Verlauf von Δt_{ü}, also der Überhitzung, mit einer dünnen strichpunktierten Linie eingezeichnet. In den Betriebszuständen IT und 64/2 wird die maximal zulässige Temperatur tₘₐₓ des Kältemitteldampfes dabei erreicht. Im Betriebszustand 32/2 ist dies hingegen nicht der Fall. Hier wird im Punkt B′ (vgl. auch Fig. 3) lediglich eine geringere Temperatur hinter dem Verdichter erreicht. Es ist daher aus Gründen der Erhöhung der Effektivität der Kälteanlage in diesem Betriebszustand durchaus wünschenswert und auch möglich, mit einer höheren Überhitzung Δt_{ü} zu arbeiten, und zwar maximal soweit, daß B′ auf der Kurve tₘₐₓ liegen würde.

Aus diesen Forderungen ergibt sich die etwas stärker und gestrichelt eingezeichnete Linie in Fig. 4 als gewünschte Kennlinie Δt_{ü}/Soll. Vereinfacht kann man die Forderung dahingehend angeben, daß die Überhitzung aus Gründen der Effektivität je nach verwendetem Kältemittel, Art und Menge des Kälteöles z.B. 8K betragen sollte. Sie sollte aber zur Vermeidung unzulässig hoher Kältemitteldampftemperaturen nach Verdichter sowie zur Vermeidung zu früher Verdampfervereisung bei bestimmten Betriebsbedingungen bis auf ein oder zwei K herab regelbar sein.

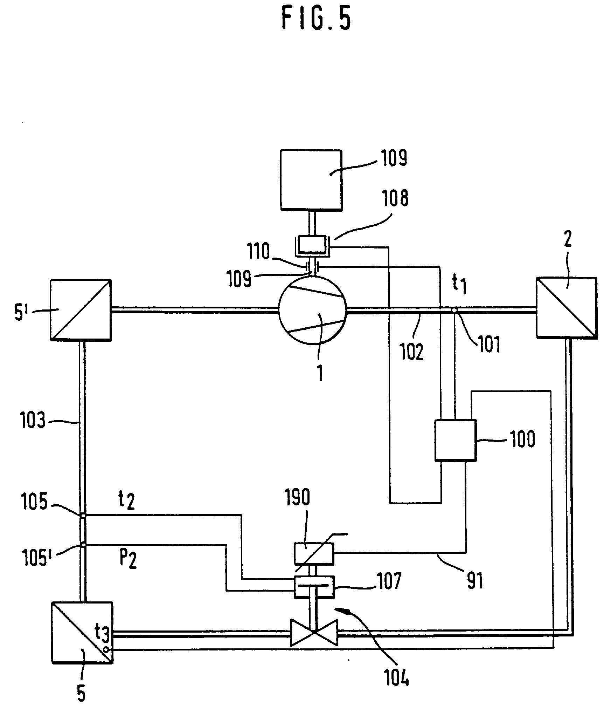

Verwendet man nun in dem Kältemittelkreislauf nach Figur 1 ein elektronisch ansteuerbares thermostatisches Expansionsventil 4 und steuert es in der gezeigten Art und Weise auf der Grundlage eines Signals an, das aus der Temperatur t₁ in der Leitung 102 mit einem Sensor 101 hinter dem Verdichter 1 und vor dem Kondensator 2 abgeleitet ist, so kann man die gewünschte Kennlinie mit einer Steuereinrichtung 100 realisieren, in dem die dort einzuhaltende Maximaltemperatur tₘₐₓ zur Steuergröße für die Steuerung der Drosselstelle 3 im Expansionsventil 4 (vgl. Fig. 2) herangezogen wird. Eine unter diesem Gesichtspunkt vereinfachte und systematisierte Klarstellung von Figur 1 enthält Figur 5. Sie unterscheidet sich von Fig. 1 dadurch, daß anstatt der Hindurchführung der Leitung hinter dem Verdampfer 5 durch den Sauggasraum 6 des thermostatischen Expansionsventils 4, letzteres - als Expansionsventil 104 - derart schematisch dargestellt an der zwischen Verdampfer 5 und Wärmetauscher 5′ Sensor 105 und 105′, durch einen Punkt symbolisiert, vorgesehen sind, die die Temperatur t₂ und den Druck p₂ ermitteln und als Stellgröße an das Ventilregelsysteme des Expansionsventils 104 abgeben. Das ist nichts anderes als das, was in der konstruktiven Ausführung des Expansionsventils 4 nach Figur 2 in Form der Leitung 6 realisiert wird, die in der dargestellten Konstruktion die Wirkung hat, daß Druck p₂ und Temperatur t₂ an der Membran 8 als Stellgrößen wirksam werden. Die Einwirkung der Temperatur t₂ bzw. des Druckes p₂ erfolgt am Steuerkopf 107 des Expansionsventils 104. Die Einwirkung des in der Steuerungseinrichtung 100 abgeleiteten Steuersignals für das Expansionsventil 104 erfolgt über ein Betätigungsorgan (Aktor) 190. In Figur 2 wird dieser Aktor durch die Heizplatte 91 gebildet.

Ergänzend ist noch vorgesehen, daß vom Steuerungsgerät 100 eine weitere Leitung an eine Schaltkupplung 108 geführt ist.

Sie kann - sozusagen als "Notbremse" - im Falle einer zu großen Heißgastemperatur t₁, die über das Expansionsventil 104 nicht mehr abgeregelt werden kann, den Antriebsmotor 109 vom Verdichter 1 trennen. Ferner ist an der Antriebswelle 109' des Verdichters 1 ein weiterer Sensor 110, der die Drehzahl (n) der Antriebswelle ermittelt, vorgesehen, die ebenfalls als Eingangsgröße der Steuereinrichtung 100 zugeführt werden und dort zur Verbesserung des Regelkreiszeitverhaltens mit berücksichtigt werden kann.

Ein dritter Sensor t₃ mißt die Temperatur der luftseitigen Verdampferoberfläche oder die Lufttemperatur nach Verdampfen zur Feststellung von eventueller Eis bildung auf der luftseitigen Verdampferoberfläche. Bei Unterschreiten einer minimalen Temperatur t₃ₘᵢₙ kann durch die Steuereinheit 100 das Betätigungsorgan 190 ebenfalls beeinflußt werden.

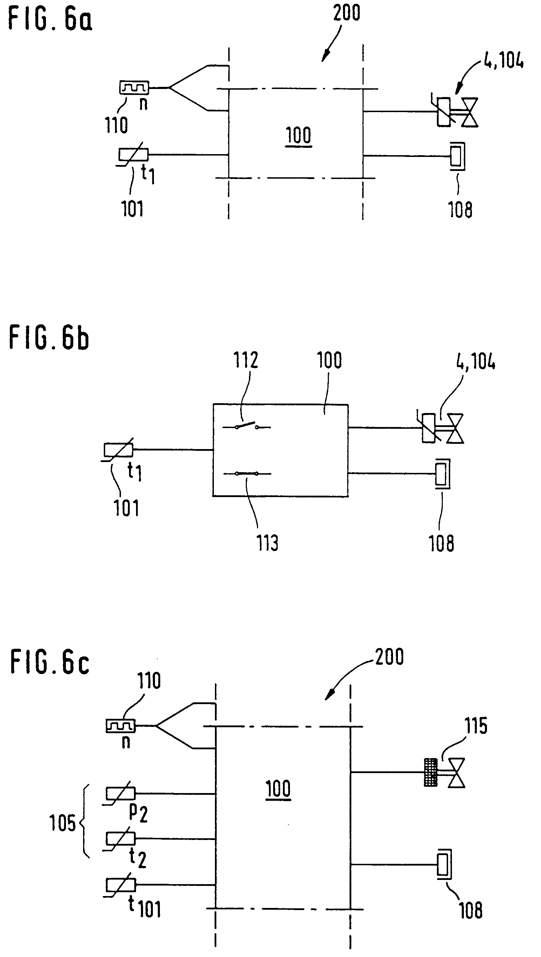

Figur 6 (a) zeigt eine Verallgemeinerung, bei der die Steuereinrichtung 100 Teil einer umfassenderen Steuereinrichtung 200 ist, etwa eines Mikroprozessors, der noch weitere Aufgaben (Verdichterregelung, Lüfterregelung) übernimmt. Die Steuerungseinrichtung 100 dient dabei der Überhitzungsregelung, d.h. der Steuerung der Überhitzung Δt_{ü} hinter dem Verdampfer 5 derart, daß die maximal zulässige Temperatur t₁ hinter dem Verdichter 1 ihren zulässigen Maximalwert t₁ₘₐₓ nicht überschreitet. Der Ausgang der Steuereinrichtung 100 geht auf das Expansionsventil 4 bzw. 104, sowie die Schaltkupplung 108. Als weitere Eingangsgröße wird der Steuerungseinheit 100 noch die Drehzahl vom Sensor 110 zugeführt, der jedoch auch mit dieser Information noch weitere Einheiten der Steuereinrichtung 200 ansteuern kann.

Figur 6 (b) zeigt schematisch eine einfache Form der Realisierung, als Low-Cost-Lösung, bei der die Steuereinrichtung 100 lediglich durch einen zweifach-T-Schalter realisiert wird, dessen eines Kontaktpaar im Falle der Änderung der Einstellung des Sollwertes am Expansionsventil 4 bzw. 104 geschlossen, ansonsten geöffnet ist, und dessen anderes Kontaktpaar 113 im Falle der Notwendigkeit des Lösens der Kompressorkupplung 108 zu öffnen ist.

Figur 6 (c) zeigt eine Verallgemeinerung der Konzeption nach Figur 6(a), die davon ausgeht, daß p₂ und t₂ nicht direkt, im Sinne einer thermostatischen Regelung wie nach Fig. 2, auf das Expansionsventil 4 oder 104 einwirken, sondern über externe Sensoren an die Steuereinrichtung 100 gelangen und dort ausgewertet werden, und daß dann von der Steuereinrichtung 100 ein einfaches elektromotorisch betätigbares Einspritzventil 115 angesteuert wird.

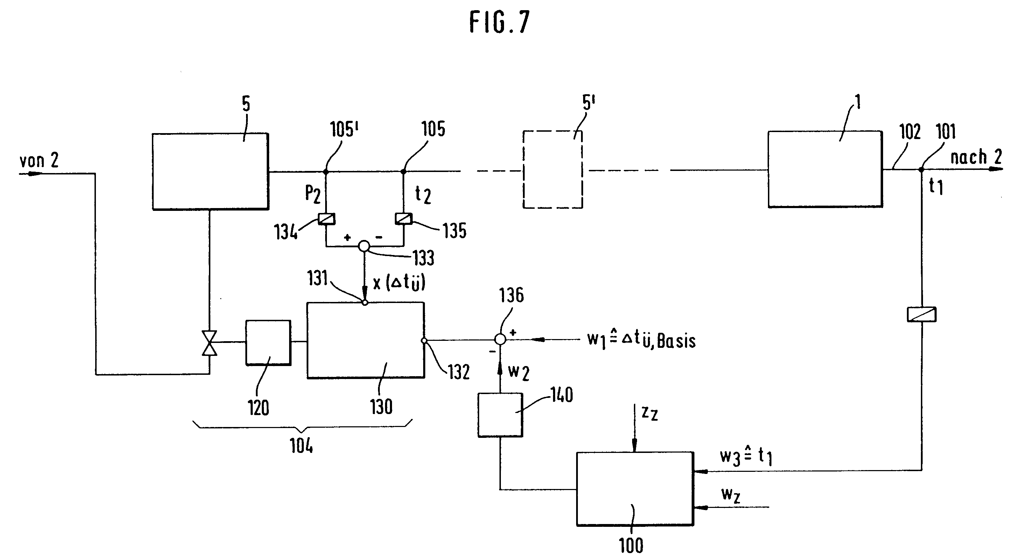

Die Figur 7 zeigt zur Vertiefung des Verständnisses der Erfindung den Regelkreis unter Einbeziehung der Meßpunkte vor und hinter dem Verdampfer 5 und dem Verdichter 1. Vor dem Verdampfer 5 ist das Expansionsventil (oder Einspritzventil) 4, 104 angeordnet, dessen Drosselstelle (entsprechend Drosselstelle 3 in Figur 2) von einem Betätigungsorgan 120 (entsprechend Übertragungsstange 10 in Figur 2) verstellt wird. Dieses Betätigungsorgan 120 wird in seiner Einstellbewegung von dem Ventil-Regelsystem 130 aktiviert (entsprechend der Steuermedien 9 in Figur 2 in den Bauteilen 8-13). Diesem werden am Eingang 131 eine Steuergröße x(Δt_{ü}) zugeführt, die in einer Verknüpfungsschaltung 133 aus den Signalen abgeleitet wird, die für Temperatur t₂ und dem Druck p₂ durch die Sensoren 105, 105′ ermittelt werden. Die grafische Ausbildung der Verknüpfungsschaltung 133 mit den Angaben "+" und "-" trägt der Tatsache Rechnung, daß ein erhöhter Druck p₂ zu einer Verminderung des Durchflußquerschnittes der Drosselstelle (z.B. Drosselstelle 3 in Fig. 2), eine erhöhte Temperatur t₂ jedoch - in Folge der Abregelung der Überhitzung - zu einer Erhöhung des Durchflußquerschnittes des Expansionsventils 104 führen soll. Man kann also, nach entsprechender Umwandlung der Signale für t₂ und p₂ in Wandlern 134 und 135 die Verknüpfungsschaltung 133 als Subtrahierer ausbilden.

An den zweiten Eingang 132 des Ventilregelsystems 130 gelangt eine Stellgröße, die im Verknüpfungsglied 136 - ebenfalls wieder beispielhaft als Subtrahierer ausgebildet - aus zwei Größen abgeleitet wird. Die eine Größe entspricht einer festen, wenngleich verstellbaren, Voreinstellung für einen Sollwert der Überhitzung Δt_{ü}. Bei dem Expansionsventil nach Figur 2 erfolgt die Voreinstellung durch die Stellung der Spindel 13 und damit die Vorspannung der Feder 12. An diesem fest voreingestellten Wert orientiert sich die zweite Größe w₂, die an die Verknüpfungsschaltung 136 gelangt und die von einem weiteren Betätigungsorgan 140, dem in Figur 2 die Heizplatte 90 entspricht, ausgeht. In Figur 7 ist dies jedoch ganz allgemein dargestellt, ohne an die Realisierung in Form einer PTC-Heizplatte gebunden zu sein; selbstverständlich muß man auch wieder durch geeignete Wandler dafür sorgen, daß die Werte, die an die Verknüpfungsschaltung 136 gelangen, miteinander kompatible Größen sind.

Das Betätigungsorgan 140 seinerseits erhält seine Ansteuerung von der Steuerschaltung 100. Ihr wird die Größe w₃ zugeführt, die von dem Sensor 101 in der Leitung 102 nach dem Verdichter 1 abgeleitet wird und der dort herrschenden Temperatur t₁ entspricht, die eine bestimmte maximale Temperatur tₘₐₓ, wie oben besprochen, nicht überschreiten darf. Gleichzeitig kann man weitere Steuergrößen an die Steuereinrichtung 100 geben, so z.B. w_{z}, z.B. als Vereisungsschutz, oder z_{z}; mittels letzterem können weitere Störgrößen und/oder Parameter, wie Kompressordrehzahl, Fahrgeschwindigkeit, Umgebungstemperatur, Außentemperatur, etc. mit in den Regelkreislauf als Parameter Eingang finden.

Die Figuren 8(a), (b), (c) zeigen die Kennlinien, wie sie sich bei einer praktischen Realisierung der Erfindung ergeben haben. Figur 8(a) zeigt die Heizleistung (N, gemessen in Watt) einer Heizplatte 90 (nach Figur 2), die bei einer Schaltung nach Figur 1, Figur 5 oder Figur 7 eingesetzt wurde. Figur 8(b) zeigt die Heißgastemperatur hinter dem Verdichter 1 und Figur 8(c) die Temperatur des Kältemitteldampfes nach dem Verdampfer 5. Auf der Abzisse ist jeweils die Überhitzung Δt_{ü} in K aufgetragen. Mit sinkender Leistung N der Heizplatte steigt die Überhitzung Δt_{ü}. Gleichzeitig steigt die Temperatur t₁ hinter dem Verdichter. Die Temperatur nach dem Verdampfer fällt. Es muß also stets eine Steuerung bzw. Regelung derart erfolgen, daß einerseits t₁ seinen Maximalwert nicht überschreitet, daß man aber andererseits unter Wahrung dieses Maximalwerts maximale Kühlung, d.h. möglichst niedrige Temperatur t₂ erhält.

Figur 9(a) zeigt die Verdampferleistung Q_{V} in kW und Temperatur t₁ des Kältemitteldampfes hinter dem Verdichter in Abhängigkeit von der Überhitzung Δt_{ü} in K bei verschiedenen Betriebsbedingungen (t_{Le}=Lufttemperatur vor dem Verdampfer; P_{RCa}=Druck des erhitzten Kühlmitteldampfes hinter dem Verdichter 1). Die Kurven nach Fig. 9a, insbesondere die mittlere, zeigen, daß bei einer Überhitzungstemperatur von Δt_{ü} ca. 8K ein Maximum der Verdampferleistung Q_{V} gegeben ist. Aus einem Vergleich der Kurven nach Figur 9(a) und (b) z.B. für t_{Le}=25°C, P_{RCa}= 20bar, folgt, daß das Maximum der Verdampferleistung Q_{V} bei einer Überhitzung von ca. 8K einer Heißgastemperatur hinter dem Verdichter von ca. 130°C entspricht. Dies sind die optimalen Bedingungen des Kältemittelkreislaufes, die durch die erfindungsgemäße Steuerung und Regelung möglichst bei allen sich ändernden Betriebsbedingungen eingehalten werden sollen.

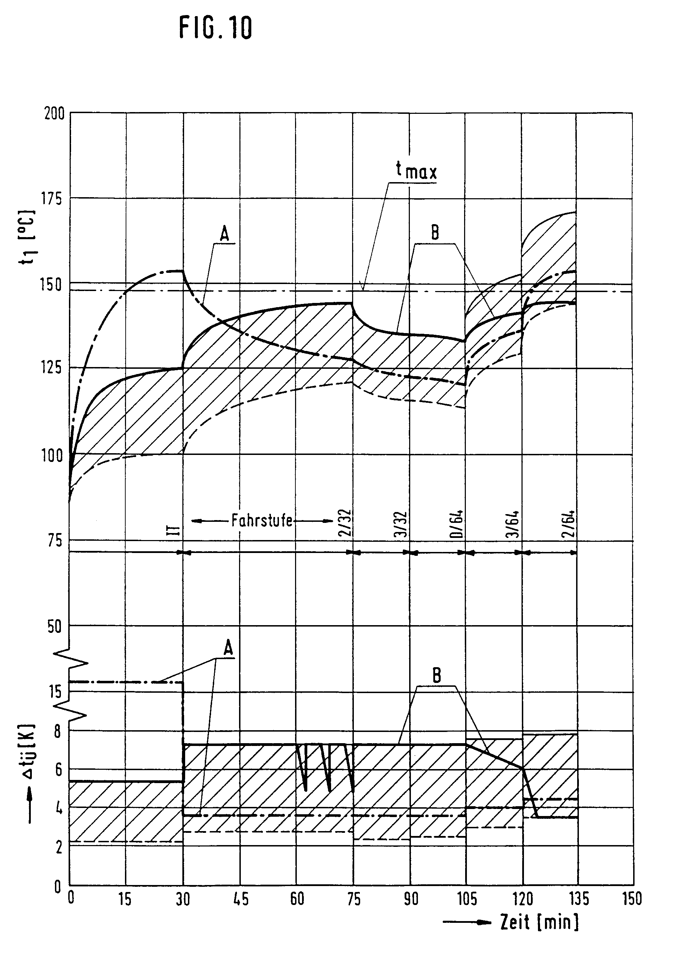

Figur 10 zeigt nun das Verhalten einer Klimaanlage nach Figur 1, 5 oder 7 im Fahrzeug bei verschiedenen Betriebsbedingungen, wobei im oberen Teil von Figur 10 t₁ in °C, also die Temperatur hinter dem Verdichter, und im unteren Bereich Δt_{ü} in °K, also die Überhitzung, aufgetragen ist. Die Diagramme zeigen ein typisches Verhalten einer Fahrzeugklimaanlage bei einer Umgebungstemperatur von 40°C, bei 40% relativer Feuchtigkeit und einer Solarbelastung des Fahrzeuges von 1000 W/m². Die einzelnen Fahrbedingungen sind: IT=Leerlauf; 2/32=2. Fahrstufe bei 32 km/h; D/64 Fahrstufe D bei 64 km/h; etc. Die Angabe "Fahrstufe" bedeutet die Schaltstellung des Automatikgetriebes. Die in dicker Linie strichpunktiert eingezeichnete Kurve A stellt den Verlauf der Temperatur t₁ hinter dem Verdichter bei Verwendung eines herkömmlichen thermostatischen Expansionsventils ohne Ansteuerung in Abhängigkeit von der Überhitzung dar. Es zeigt sich dabei, daß sowohl relativ schnell im Leerlauf, nach ca. 15 Minuten und dann wieder gegen Ende des Versuchsablaufs, im 2. Gang bei 64 km/h, also relativ hoher Drehzahl des Motors, die Temperatur t₁ des Heißgases nach dem Verdichter unzulässig hoch wird.

Die in dicker Linie durchgezogene Kurve B zeigt den Verlauf bei erfindungsgemäßer Ansteuerung. Es ist ersichtlich, daß die Temperatur t₁ in Folge der Regelung der Überhitzung unterhalb des maximal zulässigen Wertes tₘₐₓ bleibt. Man kann dabei als Sollwert von einem höheren Δt_{ü} ausgehen, da man ja, falls es zu hoch wird, abregeln kann. Der schraffierte Bereich ist der Bereich, in dem bei Verwendung eines ansteuerbaren thermostatischen Expansionsventils eine Regelung oder Steuerung erfolgen kann. Im unteren Bereich von Figur 10 ist die Überhitzung eingetragen.

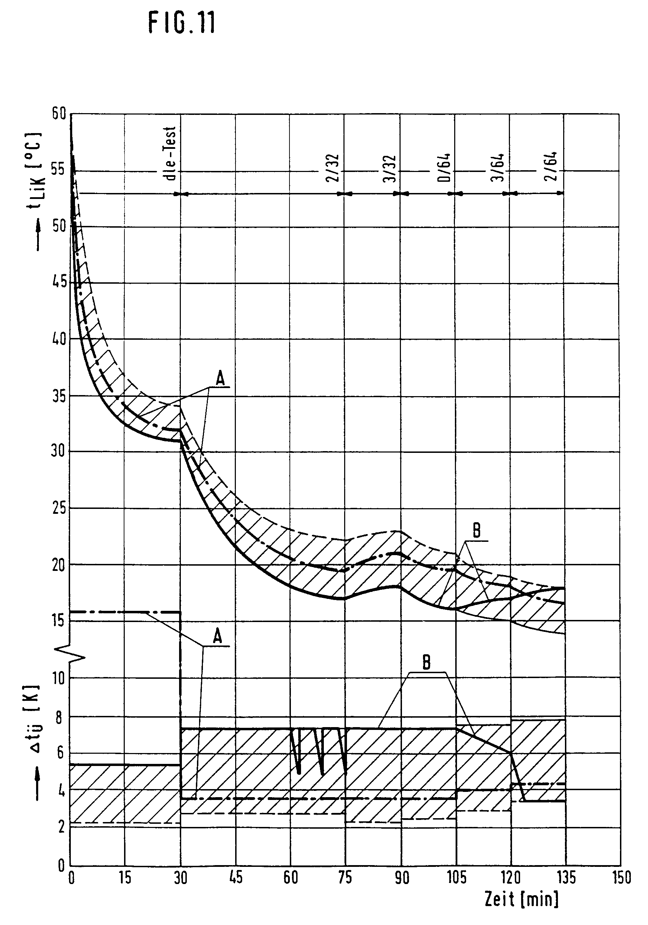

Figur 11 zeigt bei denselben Betriebsbedingungen den Verlauf der Temperatur t_{Lik} im Fahrzeug im Kopfraum. Dabei gibt die in starken Linien angezeichnete strichpunktierte Linie den Verlauf der Kurve bei einem herkömmlichen nicht ansteuerbaren thermostatischen Expansionsventil an; die Kurve B, die in starker Linie durchgezogen ist, gibt den Verlauf der Kopfraumtemperatur t_{Lik} bei Ansteuerung des thermostatischen Expansionsventils in Abhängigkeit von der Überhitzung an. Es zeigt sich dabei, daß die Absenkung der Temperatur bei der Erfindung (Kurve B) stärker erfolgt wie nach dem Stande der Technik, daß jedoch bei tiefer Temperatur, die eine zu hohe Temperatur hinter dem Verdichter mit sich bringen würde, in Folge der Abregelung der Überhitzung eine weitere Absenkung der Kopfraumtemperatur nicht mehr stattfindet, sondern eine Stabilisierung mit leichtem Anstieg eintritt, die aber noch in dem Bereich sich bewegt, der jederzeit akzeptabel ist, zumal damit nicht nur eine zu starke Beanspruchung der Klimaanlage, sondern u.U. auch eine möglicherweise als unangenehm empfundene zu starke Abkühlung vermieden wird.

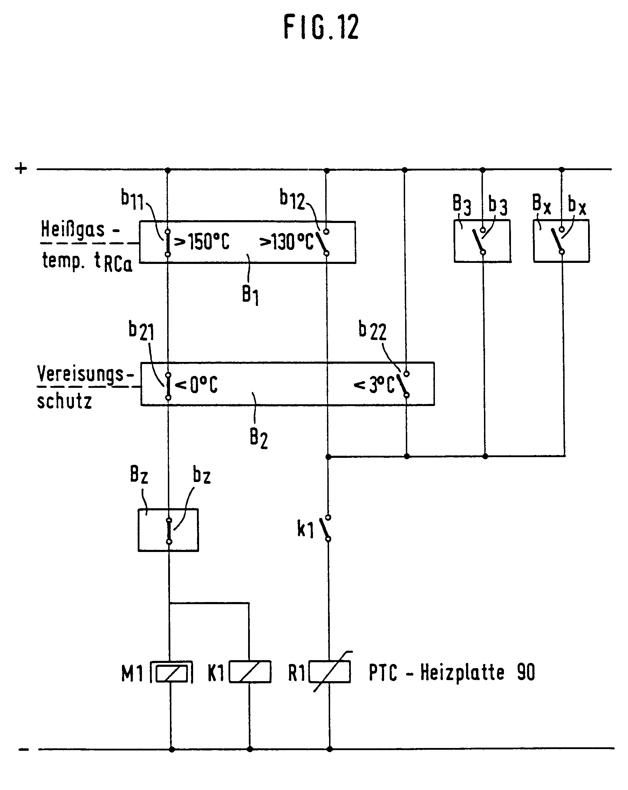

Figur 12 zeigt eine einfache Schaltung in Low-Cost Ausführung in der Art, wie sie in Figur 6 a oder b angedeutet ist, etwas mehr im Detail. Die erste Sicherheitskette besteht aus Schaltelementen entsprechend dem Stand der Technik. In dem Duo-Schalter B1 öfnet sich der Ruhekontakt b₁₁ bei zu hoher Heißgastemperatur z.B. bei t₁>150°C. Im Duo-Schalter B2 öffnet sich der Ruhekontakt b₂₁ bei Vereisung des Verdampfers (Vereisungsschutz) z.B. bei t₃<0°C. Der Schalter B_{z} mit dem weiteren Ruhekontakt b_{z} kann weitere Sicherheitsfunktionen übernehmen. Mit M1 ist die Kupplung des Verdichters zu seinem Antrieb bezeichnet. Sind die Ruhekontakte b₁₁, b₂₁, b_{z} geschlossen, so erfolgt also eine Kupplung des Verdichters 1 an den Antriebsmotor. Außerdem erhält die Spule K₁ eine Relais Strom und schließt damit den Kontakt K₁ in einer zweiten Kette, die der Abregelung der Überhitzung durch das Expansionsventil dient. Die Kontakte b₁₂ und b₂₂ der Duo-Schalter B1 und B2 sowie die Schalter B3 und Bx sind im normalen Betriebsfall der Kälteanlage geöffnet, wodurch die PTC-Heizplatte 90 des thermostatischen Expansionsventils 4 bzw. 104 nach Figur 2 nicht bestromt wird. In diesem Falle arbeitet das Ventil mit einer hohen, leistungsoptimalen Überhitzung. Wenn dagegen einer der Kontakte b₁₂, b₂₂, b₃ oder bₓ schließt, b₁₂ des Duoschalters B1 z.B. bei einer Heißgastemperatur t₁>130°C oder b₂₂ des Duo-Schalters B2 bei einer Verdampfertemperatur t₃<3°C oder die Schalter B3 und Bx aufgrund anderer kritischer Betriebsbedingungen der Kälteanlage, dann wird die PTC-Heizplatte 90 des Expansionsventils 4 bzw. 104 mit Strom beaufschlagt. In diesem zweiten Fall erfolgt eine Vergrößerung des Durchflußquerschnittes der Drosselstelle 3 und damit eine Absenkung der Überhitzung. Die geringere sich einstellende Überhitzung Δt_{ü} des Kältemittels nach Verdampfer bewirkt, daß die Temperatur t₁ wieder abnimmt und die Gefahr der Verdampfervereisung durch abnehmende Verdampferleistung reduziert wird.

Die Schalter B3 und BX können dem Aufgreifen zusätzlicher Einflußgrößen dienen. Parallel dazu kann man weitere Schalter vorsehen. Die Schaltung nach Figur 12 ist beliebig erweiterbar, wie durch den Pfeil rechts oben in Figur 12 angedeutet.

## Patentansprüche

1. An Bord eines Kraftfahrzeugs zu betreibende Kälteanlage mit einem Verdichter (1), einem Kondensator (2) und einem Verdampfer (5) sowie einem elektrisch ansteuerbaren thermostatischen Expansionsventil (4, 104) zwischen dem Kondensator (2) und dem Verdampfer (5), wobei letzteres ein elektrisch ansteuerbares Betätigungsorgan (90, 120, 190) aufweist, das zur Regelung der Überhitzung (Δt_{Ü}) des Kältemitteldampfes von einem Signal ansteuerbar ist, welches von der Temperatur (t₁) in der Leitung (102) zwischen dem Verdichter (1) und dem Kondensator (2) sowie von der Temperatur (t₂) in der Leitung (103) hinter dem Verdampfer (5) abgeleitet ist, wobei die Temperatur (t₁) mittels eines Sensors (101) erfaßbar ist, **dadurch gekennzeichnet**, daß das von der Temperatur (t₁) abgeleitete Signal das Betätigungsorgan (90, 120, 190) des Expansionsventils (4, 104) derart ansteuert, daß eine Abregelung der Überhitzung (Δt_{Ü}) des Kältemitteldampfes in der Leitung (103) erfolgt, wenn die Temperatur (t₁) in der Leitung (102) einen bestimmten Wert (tₘₐₓ) überschreitet, und daß zusätzlich der Druck (P₂) in der Leitung (103) hinter dem Verdampfer (5) zur Regelung der Überhitzung (Δt_{Ü}) des Kältemitteldampfes herangezogen wird.

2. Kälteanlage nach Anspruch 1, dadurch gekennzeichnet, daß zum Schutz vor Verdampfvereisung das von der Temperatur (t₃) an der Verdampferoberfläche oder der Luft nach dem Verdampfer (5) abgeleitete Signal das Betätigungsorgan (90, 120, 190) des Expansionsventils (4, 104) in der Art ansteuert, daß eine Abregelung der Überhitzung (Δt_{Ü}) des Kältemitteldampfes in der Leitung (130) hinter dem Verdampfer (5) erfolgt, wenn die Temperatur (t₃) an der Verdampferoberfläche oder der Luft nach dem Verdampfer (5) einen bestimmten Wert unterschreitet.

3. Kälteanlage nach Anspruch 1 oder 2, dadurch gekennzeichnet, daS das vom Sensor (101) abgeleitete Signal in einer Steuereinrichtung (100) in ein das Betätigungsorgan (90, 120, 120) des Expansionsventils (4, 104) betätigendes Signal umgesetzt wird, welches den Durchflußquerschnitt (3) des Expansionsventils (4, 104) in Richtung eines größeren Durchflußquerschnitts verändert, wenn die Temperatur (t₁) in der Leitung (102) zwischen Verdichter (1) und Kondensator (2) einen bestimmten maximal zulässigen Wert (tₘₐₓ) überschreitet.

4. Kälteanlage nach wenigstens einem der vorhergehenden Ansprüche, dadurch gekennzeichnet, daß in der Leitung (102) zwischen Verdichter (1) und Kondensator (2) zur Feststellung der Temperatur (t₁) ein Sensor (101) vorgesehen ist, und daß das von ihm abgeleitete Signal in einer Steuereinrichtung (100) in ein das Betätigungsorgan (90, 120, 120) des Expansionsventils (4, 104) betätigendes Signal umgesetzt wird, das den Durchflußquerschnitt (3) des Expansionsventils (4, 104) in Richtung eines geringeren Durchflußquerschnittes verändert, wenn die Temperatur (t₁) in der Leitung (102) zwischen Verdichter (1) und Kondensator (2) einen bestimmten Wert unterschreitet.

5. Kälteanlage nach wenigstens einem der vorhergehenden Ansprüche, dadurch gekennzeichnet, daß die Einwirkung von Druck (P₂) und Temperatur (t₂) des Kältemitteldampfes hinter (6) dem Verdampfer (5) auf das Ventilregelsystem (8, 9, 10) des Expansionsventils (4, 104) derart bestimmt ist, daß sich, wenn die Temperatur (t₁) in der Leitung (102) hinter dem Verdichter (1) den maximal zulässigen Wert (tₘₐₓ) nicht erreicht, in der Leitung (103) hinter dem Verdampfer (5) eine Überhitzung (Δt_{Ü}) einstellt, bei der die Leistung (Qᵥ) des Verdampfers (5) ein Maximum ist.

6. Kälteanlage nach wenigstens einem der vorhergehenden Ansprüche, dadurch gekennzeichnet, daß die Überhitzung (Δt_{Ü}) auf ca. 8K eingestellt ist.

7. Kälteanlage nach Anspruch 3 oder 4, dadurch gekennzeichnet, daß die Steuereinrichtung (100) durch Kontakte (112, 113; b₁₂) aufweist, die bei Unter- bzw. Überschreitung einer bestimmten Temperatur in der Leitung (102) zwischen Verdichter (1) und Kondensator (2) die Ansteuerung des Expansionsventils (4, 104) aus- bzw. einschalten.

8. Kälteanlage nach wenigstens einem der vorhergehenden Ansprüche, dadurch gekennzeichnet, daß die Steuereinrichtung (100) weitere Einrichtungen aufweist, um eine Beeinflussung der Überhitzung (Δt_{Ü}) als Funktion weiterer Parameter (w_{z}, Z_{z}) einzuleiten.

9. Kälteanlage nach wenigstens einem der vorhergehenden Ansprüche, dadurch gekennzeichnet, daß bei Überschreiten der maximal zulässigen Temperatur (t₁) in der Leitung (102) nach dem Verdichter (1) eine Abschaltung des Antriebsmotors (109) des Verdichters (1) von diesen erfolgt.

10. Kälteanlage nach wenigstens einem der vorhergehenden Ansprüche, dadurch gekennzeichnet, daß die Steuereinrichtung (100) zur Verbesserung des Zeitverhaltens des Regelkreises als Hauptstörgröße die Kompressor- oder Motordrehzahl mitverarbeitet.

## Claims

1. A cooling system to be operated in a motor vehicle, with a compressor (1), a condenser (2) and an evaporator (5) and an electrically controllable thermostatic expansion valve (4, 104) between the condenser (2) and the evaporator (5), wherein said expansion valve is provided with an electrically controllable actuating member (90, 120, 190) which in order to control over-heating (Δt_{ü}) of the refrigerant vapour can be controlled by a signal which is obtained from the temperature (t₁) in the line (102) between the compressor (1) and the condenser (2) and from the temperature (t₂) in the line (103) behind the evaporator (5), wherein the temperature (t₁) can be sensed by means of a sensor (101), characterised in that the signal obtained from the temperature (t₁) controls the actuating member (90, 120, 190) of the expansion valve (4, 104) such that regulation of overheating (Δt_{ü}) of the refrigerant vapour in the line (103) occurs when the temperature (t₁) in the line (102) exceeds a certain temperature (tₘₐₓ) and that additionally the pressure (P₂) in the line (103) behind the evaporator (5) is used for controlling over-heating (Δt_{ü}) of the refrigerant vapour.

2. Cooling system according to claim 1, characterised in that for protection against evaporation freezing, the signal obtained from the temperature (t₃) on the surface of the evaporator or of the air beyond the evaporator (5) controls the actuating member (90, 120, 190) of the expansion valve (4, 104) such that regulation of over-heating (Δt_{ü}) of the refrigerant vapour in the line (103) behind the evaporator (5) occurs when the temperature (t₃) on the surface of the evaporator or of the air beyond the evaporator (5) is below a certain value.

3. Cooling system according to claim 1 or 2, characterised in that the signal obtained from the sensor (101) is converted in a control apparatus (100) into a signal actuating the actuating member (90, 120, 190) of the expansion valve (4, 104), which changes the through-flow cross-section (3) of the expansion valve (4, 104) in the direction of a greater through-flow cross-section when the temperature (t₁) in the line (102) between the compressor (1) and the condenser (2) exceeds a certain maximum permitted value (tₘₐₓ).

4. Cooling system according to at least one of the preceding claims, characterised in that in the line (102) between the compressor (1) and the condenser (2) a sensor is provided for determining the temperature (t₁) and that the signal obtained therefrom is converted in a control apparatus (100) into a signal actuating the actuating member (90, 120, 190) of the expansion valve (4, 104) which changes the through-flow cross-section (3) of the expansion valve (4, 104) in the direction of a smaller through-flow cross-section when the temperature (t₁) in the line (102) between the compressor (1) and the condenser (2) is below a certain value.

5. Cooling system according to at least one of the preceding claims, characterised in that the influence of pressure (P₂) and temperature (t₂) of the refrigerant vapour behind (6) the evaporator (5) on the valve control system (8, 9, 10) of the expansion valve (4, 104) is determined such that when the temperature (t₁) in the line (102) behind the compressor (1) does not reach the maximum permitted value (tₘₐₓ) over-heating (Δt_{ü}) occurs in the line (103) behind the evaporator (5), which is a maximum for the capacity (Qᵥ) of the evaporator (5).

6. Cooling system according to at least one of the preceding claims, characterised in that the over-heating (Δt_{ü}) is set at approximately 8K.

7. Cooling system according to claim 3 or 4, characterised in that the control apparatus (100) is provided with through-contacts (112, 113; b₁₂) which, when a certain temperature is gone below or is exceeded in the line (102) between the compressor (1) and the condenser (2), respectively switch off or on the activation of the expansion valve (4, 104).

8. Cooling system according to at least one of the preceding claims, characterised in that the control apparatus (100) is provided with further apparatuses in order to initiate the affecting of the over-heating (Δt_{ü}) as a function of further parameters (w_{z}, Z_{z}).

9. Cooling system according to at least one of the preceding claims, characterised in that when the maximum permitted temperature (t₁) is exceeded in the line (102) after the compressor (1), switching-off of the drive motor (109) of the compressor (1) takes place as a result.

10. Cooling system according to at least one of the preceding claims, characterised in that in order to ameliorate the time response of the control system as the main disturbance variable, the control apparatus (100) also processes the speed of rotation of the compressor or engine.

## Revendications

1. Système de réfrigération destiné à être mis en service à bord d'un véhicule automobile et comprenant un compresseur (1), un condenseur (2) et un évaporateur (5) ainsi qu'une soupape thermostatique de détente (4, 104) commandée électriquement et montée entre le condenseur (2) et l'évaporateur (5), ce dernier comprenant un organe d'actionnement (90, 120, 190) commandé électriquement et qui peut être commandé pour le réglage de la surchauffe (Δt_{ü}) de la vapeur de l'agent réfrigérant par un signal qui est déduit de la température (t₁) régnant dans le conduit (102) situé entre le compresseur (1) et le condenseur (2) ainsi que de la température (t₂) régnant dans le conduit (103) situé derrière l'évaporateur (5), la température (t₁) étant détectable au moyen d'un capteur (101), caractérisé en ce que signal déduit de la température (t₁) attaque l'organe d'actionnement (90, 120, 190) de la soupape de détente (4, 104) de manière qu'aie lieu un réglage de la surchauffe (Δt_{ü}) de la vapeur de l'agent réfrigérant dans le conduit (103) lorsque la température (t₁) régnant dans le conduit (102) dépasse une valeur déterminée (tₘₐₓ) et en ce qu'en plus la pression (P₂) régnant dans le conduit (103) situé derrière l'évaporateur (5) est utilisée pour le réglage de la surchauffe (Δt_{ü}) de la vapeur d'agent réfrigérant.

2. Système de réfrigération selon la revendication 1, caractérisé en ce que, pour la protection contre le givrage de l'évaporateur, le signal déduit de la température (t₃) de la surface de l'évaporateur ou de l'air en aval de l'évaporateur (5), attaque l'organe d'actionnement (90, 120, 190) de la soupape de détente (4, 104) de manière qu'un réglage de la surchauffe (Δt_{ü}) de la vapeur d'agent réfrigérant ait lieu dans le conduit (130) situé derrière l'évaporateur (5) lorsque la température (t₃) de la surface de l'évaporateur ou de l'air se trouvant en aval de l'évaporateur (5) descend au-dessous d'une valeur déterminée.

3. Système de réfrigération selon la revendication 1 ou 2, caractérisé en ce que le signal déduit du capteur (101) est converti dans un dispositif de commande (100) en un signal actionnant l'organe d'actionnement (90, 120, 120) de la soupape de détente (4, 104) et qui modifie la section de passage (3) de la soupape de détente (4, 104) dans le sens d'un agrandissement de la section de passage lorsque la température (t₁) régnant dans le conduit (102) situé entre le compresseur (1) et le condenseur (2) dépasse une valeur maximale déterminée admissible (tₘₐₓ).

4. Système de réfrigération selon au moins l'une des revendications précédentes, caractérisé en ce qu'un capteur (101) est prévu dans le conduit (102) situé entre le compresseur (1) et le condenseur (2) pour la détection de la température (t₁) et en ce que le signal qu'il en déduit est converti dans un dispositif de commande (5) en un signal actionnant l'organe d'actionnement (90, 120, 120) de la soupape de détente (4, 104) et qui modifie la section de passage (3) de la soupape de détente (4, 104) dans le sens d'une réduction de la section de passage lorsque la température (t₁) régnant dans le conduit (102) situé entre le compresseur (1) et le condenseur (2) descend au-dessous d'une valeur déterminée.

5. Système de réfrigération selon au moins l'une des revendications précédentes, caractérisé en ce que l'effet de la pression (p₂) et de la température (t₂) de la vapeur de l'agent réfrigérant derrière (6) l'évaporateur (5) sur le système de réglage de soupape (8, 9, 10) de la soupape de détente (4, 104) est déterminé de manière que, lorsque la température (t₁) régnant dans le conduit (102) situé derrière le compresseur (1) n'atteint pas la valeur maximale admissible (tₘₐₓ), il se produit dans le conduit (103) situé derrière l'évaporateur (5) une surchauffe (Δt_{ü}) à laquelle la capacité (Qᵥ) de l'évaporateur (5) est un maximum.

6. Système de réfrigération selon au moins l'une des revendications précédentes, caractérisé en ce que la surchauffe (Δt_{ü}) est réglée à environ 8K.

7. Système de réfrigération selon la revendication 3 ou 4, caractérisé en ce que le dispositif de commande (100) comprend des contacts (112, 113 ; b₁₂) qui déclenchent ou enclenchent la commande de la soupape de détente (4, 104) en cas de dépassement vers le bas ou vers le haut d'une température déterminée dans le conduit (102) situé entre le compresseur (1) et le condenseur (2).

8. Système de réfrigération selon au moins l'une des revendications précédentes, caractérisé en ce que le dispositif de commande (100) comprend d'autres dispositifs pour provoquer une modification de la surchauffe (Δt_{ü}) en fonction d'autres paramètres (w_{z}, Z_{z}).

9. Système de réfrigération selon au moins l'une des revendications précédentes, caractérisé en ce qu'en cas de dépassement de la température maximale admissible (t₁) dans le conduit (102) situé en aval du compresseur (1), il se produit une coupure entre le moteur (109) d'entraînement du compresseur (1) et ce dernier.

10. Système de réfrigération selon au moins l'une des revendications précédentes, caractérisé en ce que le dispositif de commande (100) traite également la vitesse de rotation du compresseur ou du moteur, qui représente une grandeur perturbatrice principale, pour l'amélioration de la fonction de transfert du circuit de réglage.
